# DEMANDE DE BREVET EUROPEEN

(11) **EP 0 698 939 A1**
(43) Date de publication de la demande: **28.02.1996**
(21) Numéro de dépôt: 95430005.9
(22) Date de dépôt: 25.08.1995
(51) Int. Cl.: H01Q 21/06, G01S 13/95

(54) **Réseau d'antennes pour radar profileur de vent**

(30) Priorité: 26.08.1994 FR 9410537
(71) Demandeur: ETABLISSEMENTS DEGREANE, F-83100 Toulon (FR)
(72) Inventeur: Currier, Philipp, F-83400 Hyeres (FR); Claeyman, Jean-Pierre, F-83100 Toulon (FR)
(74) Mandataire: Somnier, Jean-Louis

(57) **Abrégé**

La présente invention est relative à une structure d'antennes et à son support, qui sont destinés à être utilisés comme antenne radar pour un système de mesure et de calcul de profils de vitesse du vent à basse altitude.

Un réseau d'antennes pour radar de mesure de profils de vitesse du vent par émission d'impulsions à une fréquence comprise entre 0,4 et 1,5 giga hertz, comprenant plusieurs antennes identiques (1) d'axe longitudinal (4) comportant chacune plusieurs dipôles (3) identiques alignés selon ledit axe longitudinal et placés bout à bout, lesquelles antennes sont parallèles entre elles, co-planaires, régulièrement espacées d'un pas (28), de sorte que l'ensemble desdits dipôles desdites antennes forme un réseau sensiblement carré, dans lequel chaque antenne est dotée d'un écran réflecteur (6) essentiellement constitué par une plaque (22) plane rectangulaire s'étendant parallèlement au plan du réseau d'antennes, et dont les bords longitudinaux (7) sont parallèles à l'axe longitudinal de ladite antenne et sont pliés, lesquels écrans sont montés sur un chassis commun.

Le domaine technique de l'invention est celui de la fabrication de radars météorologiques.

## Description

La présente invention est relative à une structure d'antennes et à son support, qui sont destinés à être utilisés comme antenne radar pour un système de mesure et de calcul de profils de vitesse du vent à basse altitude.

Le domaine technique de l'invention est celui de la fabrication de radars météorologiques.

On connaît déjà par le brevet US 4 647 933 (HUGG) un réseau d'antennes pour un radar de mesure de profil de vitesse du vent le réseau d'antennes décrit dans ce document est constitué d'une pluralité d'antennes de type Yagi-Uda qui sont identiques et comprennent chacune un pilote alimenté par un générateur d'impulsion par exemple à une fréquence de 400 Méga hertz, un réflecteur et trois directeurs ; le réseau carré d'antennes Yagi est orienté à 45° par rapport aux plans est-ouest et nord-sud les cent antennes sont réparties en dix neuf groupes ; deux groupes consécutifs ou adjacents sont déphasés de 76° l'un par rapport à l'autre ; cette configuration permet de diminuer les lobes secondaires et d'améliorer le diagramme de rayonnement du réseau d'antennes.

On connaît par ailleurs par le brevet US 5 140 336 (SUOMI) un réseau d'antennes pour radar profileur de vent qui utilise des antennes de type coaxial co-linéaires ce type d'antenne est fait de sections de câble coaxial de longueur correspondant à la demi longueur d'onde de la fréquence de travail afin de générer des rayonnement selon des lobes ou diagrammes d'orientation différente, il est habituellement prévu de déphaser les antennes entre elles, ce qui pour l'utilisation de mesure du profil du vent, nécessite deux réseaux orthogonaux d'antennes coaxiales co-linéaires le réseau décrit dans ce document utilise une combinaison d'éléments coaxiaux dont les longueurs sont pour certains supérieures à la demi longueur d'onde et pour les autres inférieures à cette demi longueur d'onde.

Les deux inconvénients essentiels des réseaux d'antennes pour radar profileur de vent de type connu, concernent essentiellement leur encombrement très important et leur complexité de mise en oeuvre.

L'objectif de la présente invention est de procurer un réseau d'antennes pour radar profileur de vent d'un coût réduit, d'un encombrement également réduit et qui soit très facile à utiliser, à installer et à réparer le cas échéant.

La solution au problème posé consiste à procurer un réseau d'antennes pour radar, placé au sol ou embarqué sur un navire, de mesure de profils de vitesse du vent (ou de profils de température) en fonction de l'altitude, à basse altitude, par émission d'impulsions à une fréquence comprise entre 0,4 et 1,5 giga hertz, comprenant (et essentiellement constitué par) plusieurs (de préférence entre 4 et 12, par exemple de l'ordre de 8) antennes identiques ; chaque antenne comporte plusieurs (de préférence entre 4 et 12, par exemple de l'ordre de 8) dipôles colinéaires identiques alignés selon l'axe longitudinal de l'antenne et placés bout à bout, régulièrement disposés le long dudit axe lesdites antennes sont parallèles entre elles, co-planaires, régulièrement espacées, de sorte que l'ensemble desdits dipôles desdites antennes forme un réseau sensiblement carré chaque antenne est dotée d'un (ou associé à un) écran réflecteur essentiellement constitué par une plaque plane (ou un fond plan) rectangulaire, s'étendant parallèlement au plan du réseau d'antennes, et dont les bords longitudinaux sont parallèles à l'axe longitudinal de ladite antenne, sont pliés, de préférence sensiblement en angle droit, et s'étendent perpendiculairement audit plan du réseau d'antennes et parallèlement audit axe longitudinal de l'antenne l'ensemble des antennes et des écrans réflecteurs associés est monté sur un chassis ou cadre commun, pour former une structure en une seule pièce sensiblement rigide on obtient ainsi une structure de réseau d'antennes qui est aisément empilable ou gerbable et transportable.

Selon des modes préférentiels de réalisation :
- chacune des antennes est fixée ou montée sur ledit écran réflecteur (de préférence par deux colliers et à l'aide de deux entretoises) qui est lui même fixé (par exemple par des boulons) sur un cadre ou chassis formant un support dudit réseau d'antennes ;
- la hauteur des bords desdits écrans réflecteurs est voisine du (et/ou légèrement supérieure au) quart de la longueur d'onde correspondant à la fréquence des impulsions émises, et la largeur desdits écrans réflecteurs est voisine de la longueur d'onde correspondant à ladite fréquence ;
- lesdits dipôles de chacune desdites antennes sont protégés mécaniquement par un radome tubulaire s'étendant respectivement selon ledit axe longitudinal de chacune desdites antennes ;
- l'ensemble des dipôles dudit réseau d'antennes est alimenté (ou excité) par exemple en phase par un calculateur pilotant un générateur de signaux d'excitation, par l'intermédiaire d'un boîtier de connexion passive des différents câbles d'alimentation respective desdites antennes (lequel boîtier ne comporte pas d'organe actif de déphasage ou traitement desdites impulsions) ;
- ledit boitier comporte un répartiteur (ou diviseur) de puissance entre lesdites antennes, qui sont alimentées en parallèle, (de préférence en phase) et comporte de préférence un pondérateur d'amplitude des signaux délivrés auxdites antennes ;
- chaque antenne comporte ou intègre un répartiteur (diviseur) de puissance entre les dipoles (qui sont ainsi alimentés en parallèle, c'est à dire indépendament les uns des autres, de préférence en phase) et comporte de préférence un pondérateur d'amplitude des signaux délivrés auxdits dipoles ;
- lesdits dipôles colinéaires de chacune desdites antennes sont régulièrement espacés d'une distance voisine de (sensiblement égale à) la longueur d'onde correspondant à la fréquence d'émission des impulsions ;
- lesdits dipoles ont une longueur voisine de (sensiblement égale à) la longueur d'onde correspondant à la fréquence d'émission des impulsions ;
- chacune desdites antennes comporte un radome en matière plastique monté entre deux embouts métalliques (et conducteurs) situés aux extrémités desdites antennes,, au niveau desquels sont serrés (ou placés ou prévus) des colliers de fixation de ladite antenne sur ledit écran réflecteur, et lesdits écrans réflecteurs sont réalisés dans une tôle mince en alliage d'aluminium.

La solution au problème posé consiste également à procurer un système d'antennes pour radar de mesure de profils de vent (ou de température) à basse altitude à partir du sol, comportant plusieurs réseaux identiques selon l'invention, de préférence comportant entre 3 et 5 desdits réseaux, lesquels réseaux sont inclinés entre eux selon des angles de préférence inférieurs ou égaux à 17°, lesdits réseaux étant peu inclinés par rapport à l'horizontale, lesquels réseaux sont montés sur un support fixe ou mobile tel qu'un chariot roulant ou une remorque tractable par exemple.

La structure particulière des réseaux d'antennes selon l'invention permet, grâce à l'association de plusieurs ensembles identiques constitués chacun d'une antenne (constituée par l'ensemble des dipôles co-linéaires alignés et placés bout à bout) et d'un écran réflecteur, d'éliminer les problèmes de couplage entre deux ou plusieurs antennes qui nuiraient (en l'absence de cet écran réflecteur) aux performances du réseau d'antennes du fait que le réseau d'antennes est constitué par une association modulaire d'éléments identiques juxtaposés, le coût du réseau est notablement diminué par rapport au réseau d'antennes pour radar profileur de vent connu à ce jour ; par ailleurs on obtient également grâce à la structure modulaire de ces réseaux, une maintenance facilitée par un démontage facile de chaque ensemble constitué par une antenne et son écran réflecteur associé, qui peut être remplacé très facilement de plus dans le cas où ces antennes sont alimentés ou excité par des signaux en phase, on évite la complexité et le coût élevé de dispositifs déphaseurs actifs ou passifs.

L'invention procure des réseaux d'antenne très compacts (qui peuvent s'inscrire en vue en plan, dans un carré dont la longueur du coté est inférieure ou égale à cinq mètres par exemple) et faciles à transporter.

L'utilisation de dipôles dont la longueur est sensiblement égale à la longueur d'onde correspondant à la fréquence des signaux d'excitation permet, par rapport à l'utilisation de dipôle demi-longueur d'onde, d'obtenir un faisceau (ou lobe principal du faisceau) plus fin.

L'utilisation (par des moyens électroniques, fixes ou statiques par exemple) de signaux, de préférence en phase, pondérés en amplitude, permet de diminuer l'importance des lobes secondaires (au détriment d'un léger élargissement du faisceau ou lobe principal dont l'ouverture peut augmenter de quelques degrés, par exemple en passant de 6° à 8°).

Les nombreux avantages procurés par l'invention, seront mieux compris au travers de la description suivante qui se réfère aux dessins annexés, qui illustrent sans aucun caractère limitatif, des modes préférentiels de réalisation de réseau d'antennes selon l'invention et leur intégration dans un système d'antennes pour radar profileur de vent qui peut être monté sur un chariot mobile tel qu'une remorque tractable par un véhicule.

La figure 1 illustre en vue en perspective schématique les principaux constituants d'un réseau d'antennes pour radar profileur de vent selon l'invention.

La figure 2 est une vue coupe schématique partielle d'un ensemble essentiellement constitué par une antenne et son écran réflecteur associé, et est une vue dans un plan perpendiculaire aux axes longitudinaux (parallèles entre eux) de l'antenne et du réflecteur.

La figure 3 illustre schématiquement (en vue en perspective) un système d'antennes pour radar profileur de vent comportant trois réseaux d'antennes inclinés les uns par rapport aux autres qui peuvent pointer dans différentes directions (non coplanaires), c'est à dire balayer dans trois plans respectifs distincts, afin de permettre la mesure des différentes composantes du vecteur vitesse du vent à basse altitude.

La figure 4 illustre shématiquement en vue en coupe par un plan vertical, un système comportant 4 ou 5 réseaux.

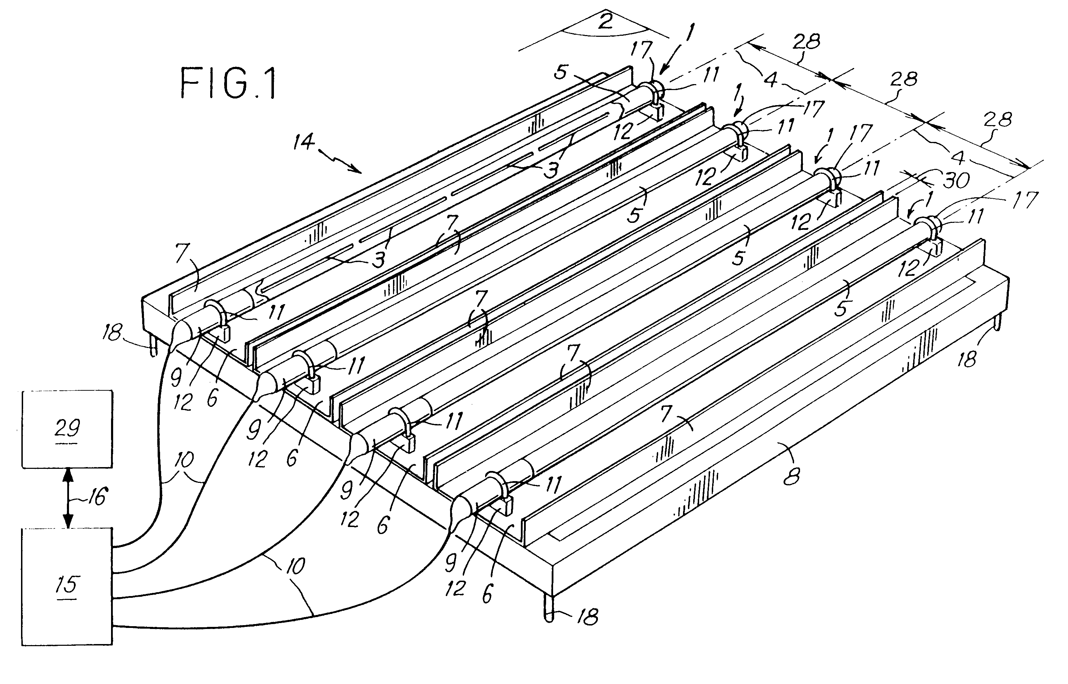

Par référence à la figure 1, un réseau 14 d'antennes pour radar de mesure du profil du vent (ou de la température de l'air) dans une partie de l'atmosphère par exemple comprise entre le niveau du sol et une altitude de l'ordre de quelques centaines à quelques milliers de mètres, comporte quatre antennes 1 identiques s'étendant selon des axes longitudinaux 4 parallèles entre eux et co-planaires situés dans le plan 2 de l'antenne (du réseau d'antennes).

Comme illustré schématiquement (pour l'antenne 1 qui est située "au fond" du réseau d'antennes de La figure 1), chaque antenne comporte quatre dipôles colinéaires 3 placés bout à bout et alignés selon ledit axe longitudinal 4 de ladite antenne, lesquels dipôles 3 peuvent être par exemple constitués par des portions de tubes d'aluminium dont la longueur est voisine de la longueur d'onde correspondant aux signaux ou impulsions émise par l'antenne aux fins de détermination de la vitesse du vent par mesure de l'effet doppler (variation dans la fréquence des signaux réfléchis).

Chacune desdites antennes 1 est connectée par un câble coaxial 10 (dont une extrémité peut être surmoulée sur un embout métallique 9 situé à une première extrémité de chacune des antennes) à un boîtier 15 de connexion et de liaison électrique entre lesdites antennes et un calculateur 29 intégrant des systèmes de génération des signaux haute fréquence qui peuvent par exemple être des impulsions à une fréquence voisine de 1250 méga hertz ; l'utilisation d'une fréquence de cet ordre de grandeur correspond à une longueur d'onde de l'ordre de 25 centimètres environ ce qui peut correspondre à la longueur de chacun desdits dipôles 3 et à l'espacement de leur centre à l'intérieur de ladite antenne lesdits dipôles sont protégés mécaniquement comme illustré figure 1 par un tube en matière plastique reliant l'embout 9 (situé à l'extrémité de l'antenne du coté d'alimentation des dipôles par le câble 10), jusqu'à l'embout 17 situé à la deuxième extrémité de l'antenne 1.

On voit que les antennes 1 sont régulièrement espacées d'un pas ou d'une distance 28, et que un écran réflecteur 6 est associé à chaque antenne 1.

Chaque écran réflecteur est constitué par une plaque métallique par exemple en aluminium de forme rectangulaire allongée selon l'axe longitudinal 4 dont la longueur est au moins égale à la longueur totale de l'antenne 1, et qui comporte sur ses deux bords longitudinaux 7 des plis sensiblement en angle droit de sorte que les bords 7 s'étendent selon des plans perpendiculaires au plan 2 de l'antenne et sont parallèles à l'axe longitudinal 4 de l'antenne.

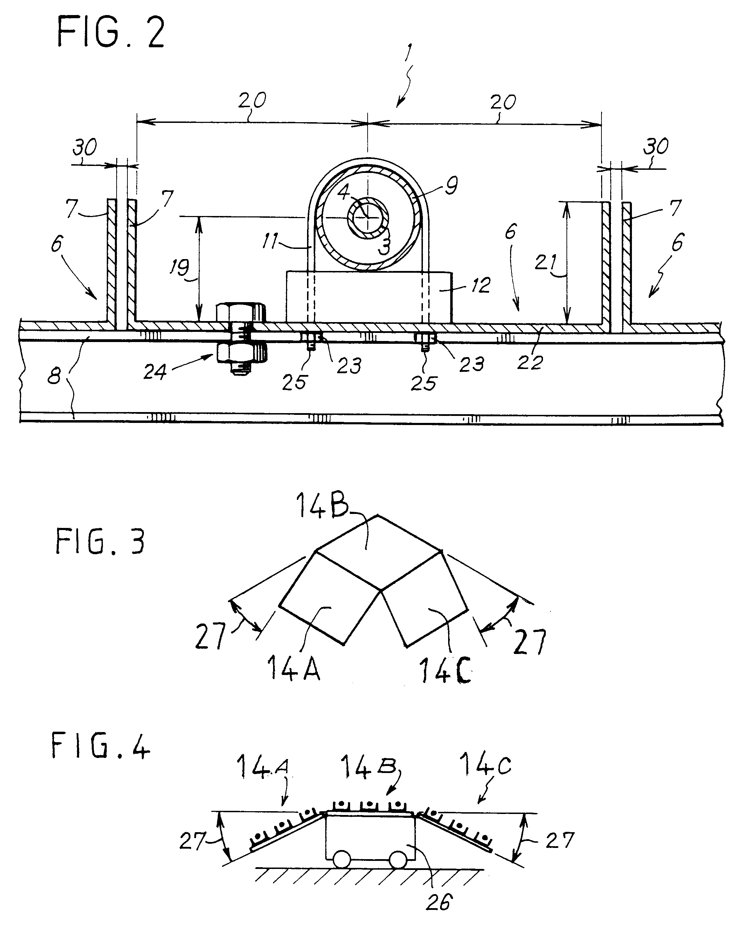

On voit également sur cette figure que chaque antenne peut être respectivement fixée sur l'écran réflecteur 6 par l'intermédiaire d'un collier 11 en forme de U en serrant respectivement l'une ou l'autre des extrémités 9, 17 de l'antenne et maintenant l'antenne par chacune de ses extrémités sur la face supérieure de chaque écran réflecteur, une entretoise 12 étant intercalée entre l'antenne et le réflecteur afin de maintenir une distance entre l'axe longitudinal de l'antenne et la surface du réflecteur (distance repérée 19 sur la figure 2) qui est de préférence voisine du quart de la longueur d'onde correspondant à la fréquence d'utilisation de l'appareil.

Comme illustré figure 1 l'ensemble des modules identiques comprenant chacun une antenne et son réflecteur associé, est monté sur un cadre 8 de préférence métallique formant support ou chassis du réseau d'antennes 14 ;le support 8 peut être doté dans sa partie inférieure de pieds (par exemple constitués par des tiges) 18 facilitant son montage ou son démontage sur un chariot 26 comme illustré figure 4 dans laquelle des réseaux d'antennes 14A, 14B et 14C sont montés sur un chariot ou une remorque 26 susceptible d'être tractée pour faciliter sa mise en place sur un site de mesure.

Comme illustré sur les figures 3 et 4 on voit qu'un premier réseau d'antennes 14A est incliné d'un angle 27 par rapport à l'horizontale, qu'un deuxième réseau 14C est incliné également d'un même angle 27 par rapport au plan horizontal selon lequel s'étend sensiblement un troisième réseau 14B les trois réseaux du système représenté figure 3 peuvent ainsi permettre de déterminer (par le calculateur 29 de la figure 1) trois composantes d'un vecteur représentatif de la vitesse du vent à une altitude donnée (par des méthodes connues) le système comportant cinq réseaux qui est illustré figure 4 permet d'améliorer la précision obtenue dans la détermination par calcul des trois composantes de la vitesse du vent et/ou de lever des incertitudes relatives à sa direction.

Comme illustré figures 1 et 2, deux écrans successifs 6 correspondant à deux antennes successives sont espacés d'une faible distance 30, qui, additionnée à la largeur de l'écran (soit deux fois la distance repérée 20), correspond à un écartement entre les axes longitudinaux des antennes permettant d'obtenir une configuration du réseau sensiblement selon une forme carrée.

Par référence à la figure 2, chaque antenne 1 comporte essentiellement une série de dipôles 3 alignés, chacun étant par exemple constitué par un tronçon de tube s'étendant selon l'axe 4 longitudinal de l'antenne, lesquels dipôles 3 sont entourés par un tube protecteur 9 d'extrémité qui est prolongé (sur la partie active centrale de l'antenne) par le dôme ou radome tubulaire repéré 5 figure 1.

La fixation de l'antenne 1 sur le réflecteur 6 est assurée par un collier 11 en forme de U dont les deux extrémités 25 filetées traversent un socle (ou une entretoise) 12 munie de trous débouchants, et traverse également le fond 22 du réflecteur 6 afin de permettre la fixation de l'antenne 1 sur le réflecteur 6 par des écrous 23 coopérant avec les extrémités 25 filetées du collier 11.

L'entretoise 12 permet de positionner l'axe 4 longitudinal de l'antenne 1 à une distance 19 du fond 22 du réflecteur correspondant sensiblement au quart de la longueur d'onde correspondant à la fréquence de fonctionnement.

Le réflecteur 6 est essentiellement constitué par un fond plan 22 rectangulaire comme illustré figure 1 dont les extrémités ou bords longitudinaux 7 sont repliés sensiblement à 90° afin de s'étendre sur une hauteur 21 au moins égale à la hauteur 19 de l'axe 4 mesuré par rapport au fond 22, c'est-à-dire au moins égale au quart de la longueur d'onde ces bords latéraux ou longitudinaux 7 sont placés à une distance 20 de l'axe 4 correspondant à la demi longueur d'onde correspondant à la fréquence de fonctionnement.

Chaque écran réflecteur 6 peut être fixé au chassis 8 par des système de fixation tels que des boulons 24 par exemple.

## Revendications

1. Réseau d'antennes pour radar de mesure de profils de vitesse du vent par émission d'impulsions à une fréquence comprise entre 0,4 et 1,5 giga hertz, comprenant plusieurs antennes identiques (1) comportant chacune plusieurs dipôles (3) colinéaires identiques lesquelles antennes sont parallèles entre elles, co-planaires, régulièrement espacées, de sorte que l'ensemble desdits dipôles desdites antennes forme un réseau sensiblement carré, dans lequel chaque antenne est dotée d'un écran réflecteur (6) essentiellement constitué par une plaque (22) plane rectangulaire s'étendant parallèlement au plan du réseau d'antennes, et dont les bords longitudinaux (7) sont parallèles à l'axe longitudinal (4) de ladite antenne et sont pliés.

2. Réseau d'antennes selon la revendication 1 dans lequel chacune des antennes est fixée sur ledit écran réflecteur (6) qui est lui même fixé sur un cadre (8) formant un support dudit réseau d'antennes.

3. Réseau d'antennes selon l'une quelconque des revendications 1 à 2 dans lequel la hauteur (21) des bords (7) desdits écrans réflecteurs est voisine du quart de la longueur d'onde correspondant à la fréquence des impulsions émises, et dans lequel la largeur de chacun desdits écrans réflecteurs est voisine de la longueur d'onde correspondant à ladite fréquence.

4. Réseau d'antennes selon l'une quelconque des revendications 1 à 3 dans lequel lesdits dipôles desdites antennes sont protégés mécaniquement par un radome (5) tubulaire s'étendant selon ledit axe longitudinal de ladite antenne.

5. Réseau d'antennes selon l'une quelconque des revendications 1 à 4 dans lequel l'ensemble des dipôles dudit réseau d'antennes est alimenté ou excité par un calculateur pilotant un générateur (29) de signaux d'excitation, par l'intermédiaire d'un boîtier (15) de connexion des différents câbles (10) d'alimentation respective desdites antennes, qui comporte un répartiteur de puissance entre lesdites antennes, qui sont alimentées en parallèle, et comporte de préférence un pondérateur d'amplitude des signaux délivrés auxdites antennes.

6. Réseau d'antennes selon l'une quelconque des revendications 1 à 5 dans lequel lesdits dipôles de chacune desdites antennes sont régulièrement espacés d'une distance voisine de la longueur d'onde correspondant à la fréquence d'émission des impulsions.

7. Réseau d'antennes selon l'une quelconque des revendications 1 à 6 dans lequel chacune desdites antennes comporte un radome en matière plastique monté entre deux embouts (9, 17) métalliques et conducteurs disposés à chacune des extrémités desdites antennes, au niveau desquels sont placés des colliers de fixation de ladite antenne sur ledit écran réflecteur, et dans lequel lesdits écrans réflecteurs sont réalisés en alliage d'aluminium.

8. Réseau d'antennes selon l'une quelconque des revendications 1 à 7 dans lequel lesdits dipoles ont une longueur voisine de la longueur d'onde correspondant à la fréquence d'émission des impulsions.

9. Réseau d'antennes selon l'une quelconque des revendications 1 à 8 dans lequel chaque antenne comporte ou intègre un répartiteur de puissance entre les dipoles et comporte de préférence un pondérateur d'amplitude des signaux délivrés auxdits dipoles.

10. Système d'antennes pour radar de mesure de profil de vent à basse altitude à partir du sol comportant plusieurs réseaux selon l'une quelconque des revendications 1 à 9, de préférence comportant entre 3 et 5 desdits réseaux, lesquels réseaux sont inclinés entre eux selon des angles(27) de préférence inférieur à 17°, l'ensemble desdits réseaux étant peu inclinés par rapport à l'horizontale.
